# EUROPEAN PATENT APPLICATION

(11) **EP 4 470 703 A1**
(43) Date of publication of application: **04.12.2024**
(21) Application number: 24166057.0
(22) Date of filing: 25.03.2024
(51) Int. Cl.: B23K 9/32, B25J 9/00, B25J 9/16, G05B 19/423

(54) **ROBOTIC WELDING TOOL TIP AND METHOD TO PROGRAM A ROBOTIC WELDING SYSTEM**

(30) Priority: 14.04.2023 US 202318300974
(71) Applicant: Illinois Tool Works Inc., Glenview IL 60025 (US)
(72) Inventor: SMITH, John William, Glenview, 60025 (US)
(74) Representative: HGF

(57) **Abstract**

Disclosed example robotic welding tool tips include a body having a first end configured to be connected to a robotic welding torch in place of a nozzle and a second end having an angled surface.

## Description

### FIELD OF THE DISCLOSURE

This disclosure relates generally to robotic welding and, more particularly, to robotic welding tool tips and methods to program a robotic welding system.

### BACKGROUND

Robotic welding is often used to perform repetitive welding operations involving workpieces having a consistent configuration and series of welds to be performed. However, programming robots to perform the welding can be a difficult, tedious, and error-prone task.

### SUMMARY

Robotic welding tool tips and methods to program a robotic welding system are disclosed, substantially as illustrated by and described in connection with at least one of the figures, as set forth more completely in the claims.

### BRIEF DESCRIPTION OF THE DRAWINGS

FIG. 1 illustrates an example robotic welding system to perform welding, including a welding-type power supply and a robot control system, in accordance with aspects of this disclosure.
FIG. 2 is a block diagram of an example implementation of the welding-type power supply and the robot control system of FIG. 1.
FIG. 3 is a block diagram of another example implementation of the welding-type power supply and the robot control system of FIG. 1.
FIGS. 4A and 4B illustrate an example robotic welding tool tip that may be installed on the robotic welding torch of FIGS. 1-3 to improve lead-through teaching of a robotic welding procedure.
FIG. 4C illustrates another example robotic welding tool tip that may be installed on the robotic welding torch of FIGS. 1-3, including a laser to indicate an aim of the welding torch.
FIGS. 5A and 5B illustrate installation of the example robotic welding tool tip of FIGS. 4A and 4B onto a robotic welding torch.
FIG. 6 illustrates placement of the example robotic welding tool tip of FIGS. 4A and 4B during lead-through teaching of a robotic welding procedure.
FIG. 7 is a flowchart representative of an example method to program a robotic welding system, in accordance with aspects of this disclosure.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

Robotic welding systems that include collaborative robots are typically capable of programming via lead-through teaching, in which an operator is able to physically grab and manipulate the robot and/or the welding torch to desired positions. To protect the operator during lead-through teaching, robotic welding systems may be equipped with teaching tips at the distal end of the welding torch. Conventional teaching tips, of which there are two basic types, have limitations that reduce the usefulness of conventional teaching tips. There are two basic types of conventional teaching tips. A first type is a solid teaching tip which has a contact tip that is drilled out to accept a tungsten piece that has been permanently fixed to the contact tip. The issue with the first type of conventional teach tip is that the teach tip is easily broken if the programmer drives the robot into the part and/or during stepping through the program if the tungsten scrapes along the part in the programmed path. The second type of conventional teach tip is a spring-loaded tip. The spring-loaded tip solves the problems with breakage noted above, but suffer from issues with accuracy. When teaching using the spring-loaded tip, the operator may not be able to determine whether the spring is depressed, which can result in an inaccurate positioning in the taught program.

Disclosed example robotic teach tips overcome the problems associated with conventional designs. In disclosed examples, the teach tip is installed over the contact tip and diffuser in place of the torch nozzle. Installation of example teach tips involves removing the nozzle, cutting the wire if necessary, and installing the teach tip over the diffuser and welding tip in place of the nozzle. The teach tip may be configured for threaded attachment or push-fit attachment.

Disclosed example teach tips are dimensioned to allow placement of the teach tip in direct contact with the part without damaging the tip, and will assist in accurate location programming in the weld program. Because this teaching tip is intended to come in direct contact with the part it is much easier for the programmer to achieve the correct work and travel angle, as well as a consistent contact-tip-to-work distance.

Disclosed example teach tips may be made out of a nonconductive material, such as a phenolic material. Example teach tips are machined, molded, or otherwise constructed so that the end of the tip forms a 90 degree angle, which allows the operator to more easily position and orient the welding torch to a 45 degree work angle in fillet joints. In some examples, the angle of the tip changes to allow the programmer more flexibility in positioning and orientation during lead-through teaching.

Disclosed example teach tips allow the operator to positively locate the torch by moving the teaching tip until the tip is in direct contact with the part. Once in contact with the part, the operator can then use the leverage caused by the contact to adjust the torch into the correct angle.

By using a non-conductive (e.g., phenolic) material, the robotic welding torch is incapable of starting a weld because the wire is blocked from making contact with the workpiece. If the operator inadvertently triggers the robotic welding system to weld, the robotic welding system will not be able to strike the arc. The teach tip also as a temperature insulation to prevent contact with potentially hot components.

As used herein, the word "exemplary" means "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

As used herein, a welding-type power source refers to any device capable of, when power is applied thereto, supplying welding, cladding, plasma cutting, induction heating, laser (including laser welding and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

Disclosed example robotic welding tool tips include a body having a first end configured to be connected to a robotic welding torch in place of a nozzle and a second end having an angled surface.

In some examples, the first end of the body has a bore having an inner diameter configured to be coupled to a gas diffuser of the robotic welding torch. In some examples, a diameter and a length of the bore are sized to fit over the gas diffuser. In some examples, a length of the body corresponds to a predetermined wire stickout length during operation of the robotic welding torch.

In some examples, the body includes an electrically insulating material. In some examples, the electrically insulating material includes a phenolic material. In some examples, the angled surface forms an angle between 30-45 degrees with respect to a longitudinal axis of the body.

In some examples, the angled surface includes a first portion at a tip of the second end and a second portion immediately adjacent the first portion toward the first end, in which the first portion forming a first angle with respect to a longitudinal axis of the body and the second portion forming a second angle with respect to the longitudinal axis of the body, and the first angle is greater than the second angle. In some such examples, the first angle is between 40-45 degrees, and the second angle is between 30-40 degrees. In some examples, a longitudinal length of the first portion is between 0.2 inches and 0.5 inches.

Disclosed example methods to program a robotic welding system involve: removing a nozzle from the robotic welding system; installing a robotic welding tool tip onto the robotic welding system in place of the nozzle; positioning the robotic welding tool tip in a position adjacent a workpiece to be welded according to a robotic welding procedure; and programming the position into the robotic welding procedure.

In some example methods, positioning the robotic welding tool tip involves placing the robotic welding tool tip into contact with the workpiece. In some example methods, installing the robotic welding tool tip involves attaching the robotic welding tool tip to a gas diffuser of the robotic welding system. Some example methods further involve selecting the robotic welding tool tip from a plurality of robotic welding tool tips having different lengths, in which the selecting is based on a wire stickout length associated with the robotic welding procedure. In some example methods, the positioning of the robotic welding tool tip involves placing the robotic welding tool tip into contact with a fillet joint having two pieces, such that the robotic welding tool tip is in contact with both pieces.

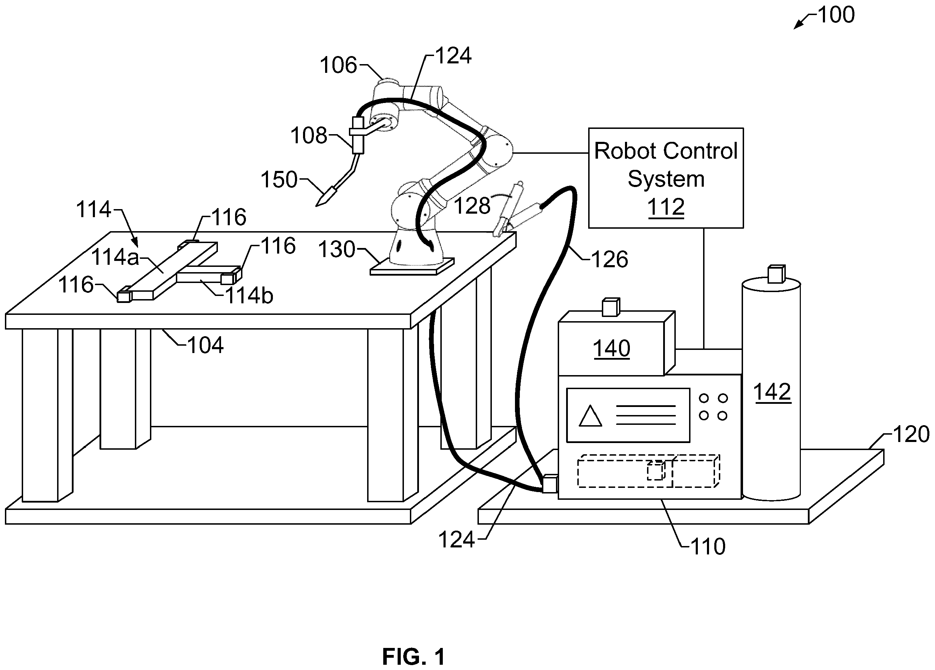

FIG. 1 illustrates an example robotic welding system 100 to perform welding. The example robotic welding system 100 of FIG. 1 includes a welding table 104, a robotic manipulator 106 configured to manipulate a welding torch 108, a welding-type power supply 110, and a robot control system 112.

The welding table 104, robotic manipulator 106, the welding torch 108, the welding-type power supply 110, and/or the robot control system 112, and/or subgroups of these components, may be packaged together (e.g., pre-assembled, pre-calibrated) to provide rapid setup of the robotic welding system 100 for welding at the end-user location. The robotic welding system 100 may be used to make repetitive welds, to leverage the consistency and repeatability advantages of the robotic manipulator 106. In the example of FIG. 1, the robotic manipulator 106 and/or the robot control system 112 are configured as a collaborative robot, which provides features that make the robotic manipulator 106 more conducive to working in areas in which people are proximate the robotic welding system 100.

In the example of FIG. 1, a workpiece 114 is positioned on the welding table 104. The workpiece 114 may include multiple components 114a, 114b which are to be welded together at one or more joints. To provide consistency in arrangement of the workpiece components 114a, 114b, the robotic welding system 100 may further include fixtures 116 attached to the welding table 104. The fixtures 116 may guide the placement of the components 114a, 114b, which can be used to consistently place the multiple components 114a, 114b.

During a welding operation or welding procedure, the robotic welding system 100 manipulates the welding torch 108, such as the illustrated welding torch, to which power is delivered by the welding-type power supply 110 via a first conductor 124 and returned by way of a work cable 126 and a work clamp 128 coupled to the work table 104. The welding equipment may further include, for example, a source of shielding gas 142, a wire feeder 140, and other accessories and/or equipment. Other accessories and/or equipment may include, for example, water coolers, fume extraction devices, one or more controllers, sensors, user interfaces, and/or communication devices (wired and/or wireless).

The example robotic welding system 100 is configured to form a weld using any known electric welding techniques. Example electric welding techniques include shielded metal arc welding (SMAW), MIG, flux-cored arc welding (FCAW), TIG, laser welding, sub-arc welding (SAW), stud welding, friction stir welding, and resistance welding. In some examples, the welding-type power supply 110 and/or other welding equipment are configured to support one or more, but fewer than all, types of welding processes. To change welding processes, the welding-type power supply 110, torch 108, and/or other welding equipment may be removed (e.g., disconnected and moved away from the robotic welding system 100) and replaced by a different welding-type power supply, torch, and/or other welding equipment that supports the desired welding process. To facilitate ease of movement, the example welding equipment may be mounted or attached to a cart 120 or other conveyance (e.g., ground conveyance, hanging conveyance, etc.). Additionally or alternatively, multiple different types of welding equipment (e.g., multiple power supplies having different capabilities, multiple torches, etc.) may be co-located (e.g., proximate to a same robotic manipulator 106, on a rack of equipment, etc.) to enable rapid reconfiguration of the robotic welding system 100.

The example robotic manipulator 106 may operate using any number of degrees of freedom to manipulate the welding torch 108. For example, the robotic manipulator 106 may include multiple joints, in which each joint has one or more degrees of freedom, to achieve multiple orientations for accessing one or more weld joints on the workpiece 114. Whereas conventional welding robots are contained within a weld cell that is protected against intrusion by operators during robot operations (e.g., welding operations and/or other movement by the robot), in some examples the robotic welding system 100 is configured as a cobot, has a controller or processor, as well as one or more sensors, that are configured to operate in a manner such that humans do not necessarily need to be excluded from the area in which the robotic manipulator 106 is operating. For example, the robotic manipulator 106 may rapidly detect and respond to collisions, may operate with reduced speed and/or joint torque relative to conventional welding robots, and/or implement other features.

The robotic manipulator 106 is coupled to the table 104 via a base 130. Once secured, the base 130 is fixed with respect to the table 104, and may serve as a reference for position and/or orientation for the robotic manipulator 106.

The example robotic manipulator 106 and/or the example robot control system 112 are configured to transmit commands, requests, data, and/or other messages and/or communications to the power supply 110 via one or more protocols. The robotic manipulator 106 and/or the robot control system 112 are further configured to receive responses, acknowledgments, data, and/or other messages and/or communications from the power supply 110 via the one or more protocols. Based on a robotic welding procedure, the robotic manipulator 106 and/or the robot control system 112 may communicate parameters to the power supply 110 for configuration according to the robotic welding procedure, and/or adjust the welding-type process based on the variables and/or other data obtained from the power supply 110 while performing welding operations. In addition to communication with the power supply 110, the robotic manipulator 106, and/or the robot control system 112, the power supply 110, the robotic manipulator 106, and/or the robot control system 112 may communicate with other welding equipment (e.g., a welding accessory, such as the wire feeder 140) and/or other robotic equipment.

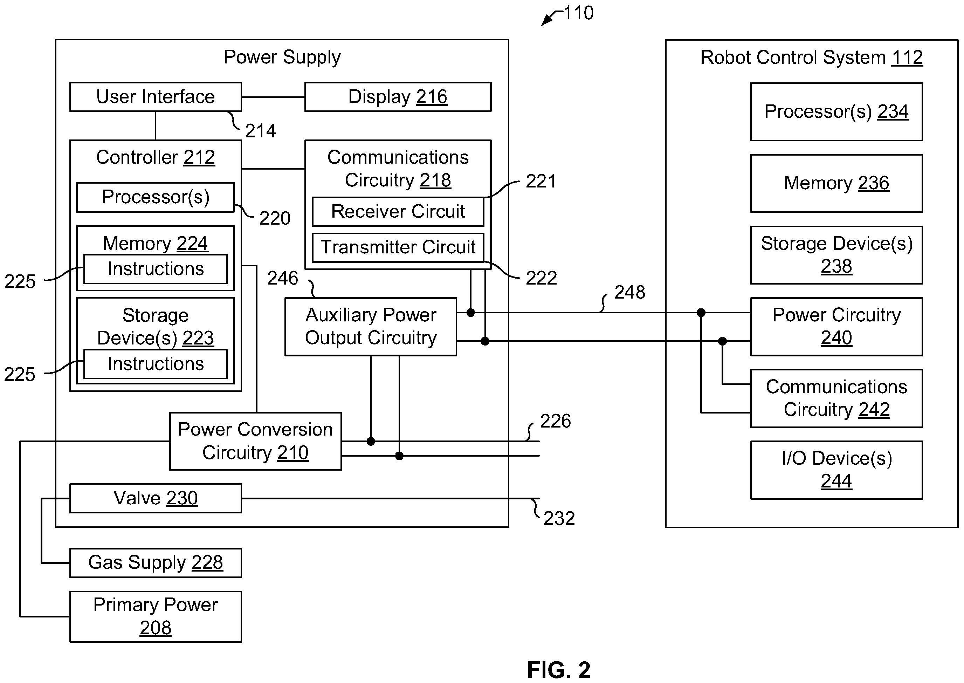

FIG. 2 is a block diagram of an example implementation of the welding-type power supply 110 and the robot control system 112 of FIG. 1. The example welding-type power supply 110 powers, controls, and supplies consumables to a welding application. In some examples, the welding-type power supply 110 directly supplies input power to the welding torch 108. In the illustrated example, the welding-type power supply 110 is configured to supply power to welding operations and/or preheating operations. The example welding-type power supply 110 may also provide power to a wire feeder to supply electrode wire to the welding torch 108 for various welding applications (e.g., GMAW welding, flux core arc welding (FCAW)).

The welding-type power supply 110 receives primary power 208 (e.g., from the AC power grid, an engine/generator set, a battery, or other energy generating or storage devices, or a combination thereof), conditions the primary power, and provides an output power to one or more welding devices and/or preheating devices in accordance with demands of the system. The primary power 208 may be supplied from an offsite location (e.g., the primary power may originate from the power grid). The welding-type power supply 110 includes a power conversion circuitry 210, which may include transformers, rectifiers, switches, and so forth, capable of converting the AC input power to AC and/or DC output power as dictated by the demands of the system (e.g., particular welding processes and regimes). The power conversion circuitry 210 converts input power (e.g., the primary power 208) to welding-type power based on a weld voltage setpoint and outputs the welding-type power via a weld circuit.

In some examples, the power conversion circuitry 210 is configured to convert the primary power 208 to both welding-type power and auxiliary power outputs. However, in other examples, the power conversion circuitry 210 is adapted to convert primary power only to a weld power output, and a separate auxiliary converter is provided to convert primary power to auxiliary power. In some other examples, the welding-type power supply 110 receives a converted auxiliary power output directly from a wall outlet. Any suitable power conversion system or mechanism may be employed by the welding-type power supply 110 to generate and supply both weld and auxiliary power.

The welding-type power supply 110 includes a controller 212 to control the operation of the welding-type power supply 110. The welding-type power supply 110 also includes a user interface 214. The controller 212 receives input from the user interface 214, through which a user may choose a process and/or input desired parameters (e.g., voltages, currents, particular pulsed or non-pulsed welding regimes, and so forth). The user interface 214 may receive inputs using any input device, such as via a keypad, keyboard, buttons, touch screen, voice activation system, wireless device, etc. Furthermore, the controller 212 controls operating parameters based on input by the user as well as based on other current operating parameters. Specifically, the user interface 214 may include a display 216 for presenting, showing, or indicating, information to an operator. The controller 212 may also include interface circuitry for communicating data to other devices in the system, such as the wire feeder, the robotic manipulator 106, and/or the robot control system 112. For example, in some situations, welding-type power supply 110 wirelessly communicates with other welding devices within the welding system. Further, in some situations, the welding-type power supply 110 communicates with other welding devices using a wired connection, such as by using a network interface controller (NIC) to communicate data via a network (e.g., ETHERNET, 10baseT, 10base100, etc.).

The controller 212 includes at least one controller or processor 220 that controls the operations of the welding-type power supply 110. The controller 212 receives and processes multiple inputs associated with the performance and demands of the system. The processor 220 may include one or more microprocessors, such as one or more "general-purpose" microprocessors, one or more special-purpose microprocessors and/or ASICS, and/or any other type of processing device. For example, the processor 220 may include one or more digital signal processors (DSPs).

The example controller 212 includes one or more storage device(s) 223 and one or more memory device(s) 224. The storage device(s) 223 (e.g., nonvolatile storage) may include ROM, flash memory, a hard drive, and/or any other suitable optical, magnetic, and/or solid-state storage medium, and/or a combination thereof. The storage device 223 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 224 may include a volatile memory, such as random access memory (RAM), and/or a nonvolatile memory, such as read-only memory (ROM). The memory device 224 and/or the storage device(s) 223 may store a variety of information and may be used for various purposes. For example, the memory device 224 and/or the storage device(s) 223 may store processor executable instructions 225 (e.g., firmware or software) for the processor 220 to execute. In addition, one or more control regimes for various welding processes, along with associated settings and parameters, may be stored in the storage device 223 and/or memory device 224, along with code configured to provide a specific output (e.g., initiate wire feed, enable gas flow, capture welding current data, detect short circuit parameters, determine amount of spatter) during operation.

In some examples, the welding power flows from the power conversion circuitry 210 through a weld cable 226. The example weld cable 226 is attachable and detachable from weld studs at each of the welding-type power supply 110 (e.g., to enable ease of replacement of the weld cable 226 in case of wear or damage). Furthermore, in some examples, welding data is provided with the weld cable 226 such that welding power and weld data are provided and transmitted together over the weld cable 226.

In some examples, the welding-type power supply 110 includes or is implemented in a wire feeder.

The example communications circuitry 218 includes a receiver circuit 221 and a transmitter circuit 222. Generally, the receiver circuit 221 receives data transmitted by the robotic manipulator 106 and/or the robot control system 112, and the transmitter circuit 222 transmits data to the robotic manipulator 106 and/or the robot control system 112.

In some examples, a gas supply 228 provides shielding gases, such as argon, helium, carbon dioxide, and so forth, depending upon the welding application. The shielding gas flows to a valve 230, which controls the flow of gas, and if desired, may be selected to allow for modulating or regulating the amount of gas supplied to a welding application. The valve 230 may be opened, closed, or otherwise operated by the controller 212 to enable, inhibit, or control gas flow (e.g., shielding gas) through the valve 230. Shielding gas exits the valve 230 and flows through a gas line 232 (which in some implementations may be packaged with the welding power output) to the wire feeder which provides the shielding gas to the welding application. In some examples, the welding-type power supply 110 does not include the gas supply 228, the valve 230, and/or the gas line 232.

The example robot control system 112 of FIG. 2 includes processor(s) 234, memory 236, one or more storage device(s) 238, power circuitry 240, communications circuitry 242, and one or more I/O device(s) 244.

The example processor(s) 234 execute instructions to configure and/or program a robotic welding procedure, and/or generates commands to execute a robotic welding procedure via the robotic manipulator 106. The processor(s) 234 may include one or more microprocessors, such as one or more "general-purpose" microprocessors, one or more special-purpose microprocessors and/or ASICS, and/or any other type of processing device. For example, the processor(s) 234 may include one or more digital signal processors (DSPs). The memory device 236 may include a volatile memory, such as random access memory (RAM), and/or a nonvolatile memory, such as read-only memory (ROM). The memory device 236 and/or the storage device(s) 238 may store a variety of information and may be used for various purposes. For example, the memory device 236 and/or the storage device(s) 238 may store processor executable instructions (e.g., firmware or software) for the processor(s) 234 to execute. In addition, one or more control regimes for various robotic manipulators and/or robotic welding procedures, along with associated settings and parameters, may be stored in the storage device(s) 238 and/or memory device 236. The storage device(s) 238 (e.g., nonvolatile storage) may include ROM, flash memory, a hard drive, and/or any other suitable optical, magnetic, and/or solid-state storage medium, and/or a combination thereof. The storage device(s) 238 store data (e.g., data corresponding to a welding application), instructions (e.g., software or firmware to perform welding processes), and/or any other appropriate data.

The power circuitry 240 converts input power to power usable by the robot control system 112 (e.g., by the processor(s) 234, the memory 236, the storage device(s) 238, communications circuitry 242, the I/O device(s) 244, and/or the robotic manipulator 106). In the example of FIG. 2, the robot control system 112 is plugged into welding-type power supply 110 to provide operational power to the robot control system 112 and/or the robotic manipulator 106. In the illustrated example, the power supply 110 includes auxiliary power output circuitry 246, which converts input power (e.g., output power from the power conversion circuitry 210, primary power 208) to auxiliary power, such as a standard AC output (e.g., 120VAC or 240VAC at 50Hz or 60Hz). In such examples, the robot control system 112 can be plugged into the power supply 110 instead of mains power, and receives the auxiliary power via an auxiliary power connection (e.g., auxiliary power conductors 248 such as an AC power cord).

The example communications circuitry 218 and the communications circuitry 242 of FIG. 2 are configured to communicate via the auxiliary power connection. In examples in which the auxiliary power conductors 248 are configured to transmit 120VAC power (or other high-voltage AC power), the communications circuitry 218 and the communications circuitry 242 may be configured to comply with the IEEE Standard 1901-2010 and/or any other power line communication standard or technique compatible with high-speed communication over the auxiliary power connection.

The I/O device(s) 244 may include operator or user interfaces and/or other data interfaces. Example I/O device(s) 244 may include a keyboard, a keypad, a mouse, a trackball, a pointing device, a microphone, an audio speaker, a display device, an optical media drive, a multi-touch touch screen, a gesture recognition interface, a magnetic media drive, and/or any other operator interface devices to enable an operator to view information about the robot control system 112, the robotic manipulator 106, a robotic welding procedure, the connected power supply 110 and/or any other connected welding equipment, and/or any other information. For example, the I/O device(s) 244 may include input and/or output device(s) to control movement of the robotic manipulator 106. In other examples, the communications circuitry 242 may also include a communication interface to communicate with and control the robotic manipulator 106.

The power supply 110 may be connected to the example robot control system 112 by plugging the robot control system 112 into the power supply 110 via the auxiliary power connection (e.g., a 120VAC outlet on the power supply). While the power supply 110 is outputting the auxiliary output power and after the robot control system 112 is powered on and initialized, the power supply 110 and the robot control system 112 may automatically pair by communicating via the auxiliary power connection. To perform the pairing, the power supply 110 detects, via the communications circuitry 218, that the robot control system is coupled to the auxiliary power connection. For example, the communications circuitry 218 (and/or the communications circuitry 242) outputs messages via the auxiliary power connection, which are received and/or acknowledged by the communications circuitry 242 (or the communications circuitry 218).

In response to detecting the robot control system 112 via the auxiliary power connection and receiving communications from the robot control system 112, the controller 212 configures the welding-type power supply 110. For example, upon establishing communication between the robot control system 112 and the power supply 110, the power supply 110 may transmit to the robot control system 112 information that can be used to configure the power supply 110. The robot control system 112 can then provide commands to the power supply 110 to configure the power supply 110 to perform the desired welding processes as part of a robotic welding procedure.

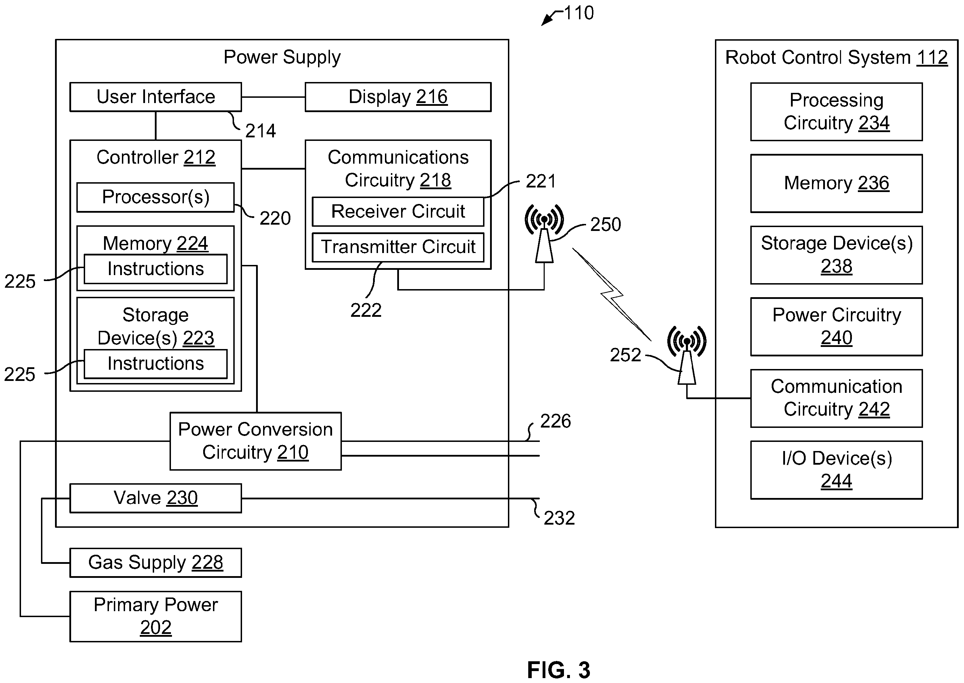

FIG. 3 is a block diagram of another example implementation of the welding-type power supply 110 and the robot control system 112 of FIG. 1. The example power supply 110 of FIG. 3 includes the components of the example power supply 110 of FIG. 2, but may include or omit the auxiliary power output circuitry 246. The example robot control system 112 of FIG. 3 includes the components of the robot control system 112 of FIG. 2.

In contrast with the power line communication of FIG. 2, the example welding-type power supply 110 and the robot control system 112 of FIG. 3 communicate via wireless communications. To this end, the example communications circuitry 218 and communications circuitry 242 are connected to respective antennas 250, 252.

While establishment of communications may occur automatically using power line communications as in FIG. 2, the example robot control system 112 and/or the power supply 110 may require initiation of pairing by the operator (e.g., via the user interface 214 and the I/O device(s) 244) to establish communication between the robot control system 112 and/or the power supply 110. For example, the operator may select a "Pair" button on each of the user interface 214 of the power supply 110 and a user interface of the robot control system 112, which then causes the communications circuitry 218 and the communications circuitry 242 to perform a pairing procedure. Upon establishing the communications channel via pairing, the power supply 110 and the robot control system 112 automatically exchange information and/or configure the power supply 110 as discussed above. In some examples, the operator may further be prompted to verify the pairing occurred between the desired power supply 110 and robot control system 112 (e.g., neither the power supply 110 nor the robot control system 112 paired with an unintended device nearby).

The example robot control system 112 allows an operator to program the robotic welding system 100 to perform a robotic welding operation by lead-through teaching, in which the operator physically grasps and moves the robotic manipulator 106 and/or the welding torch 108 to positions and orientations representative of welds to be performed (e.g., starts, ends, corners, etc.). The robot control system 112 may interpolate and/or otherwise process and link the programmed positions to generate the robotic welding procedure including instructions to be performed by the robot control system 112 and/or the power supply 110.

To improve the ability of the operator to handle the robotic manipulator 106 and/or the welding torch 108, the operator may install a teach tip 150 onto the welding torch 108. As disclosed in more detail below, the teach tip 150 may be dimensioned so as to enable the operator to easily position and/or orient the welding torch 108 for programming of the robotic welding procedure. As used herein, the terms "tool tip" and "teach tip" are used interchangeably.

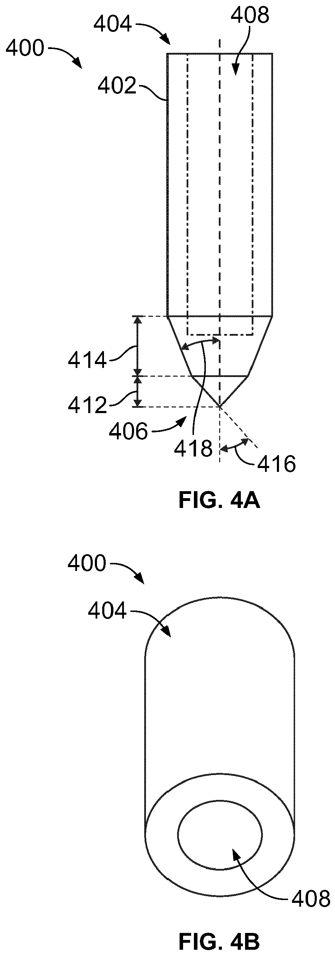

FIG. 4A is an elevation view of an example robotic welding tool tip 400 that may be installed on the robotic welding torch 108 of FIGS. 1-3 to improve lead-through teaching of a robotic welding procedure. The example tool tip 400 includes a body 402, which has a first end 404 and a second end 406.

The first end 404 of the tool tip 400 is configured to be connected to the robotic welding torch 108. In particular, the example tool tip 400 is configured to be connected in place of the nozzle of the robotic welding torch 108. To this end, the example tool tip 400 includes a bore 408 extending from the first end 404 toward the second end 406, but does not extend through the entire length of the tool tip 400. The bore 408 may be sized (e.g., diameter and length) to fit over the gas diffuser and contact tip of the welding torch 108.

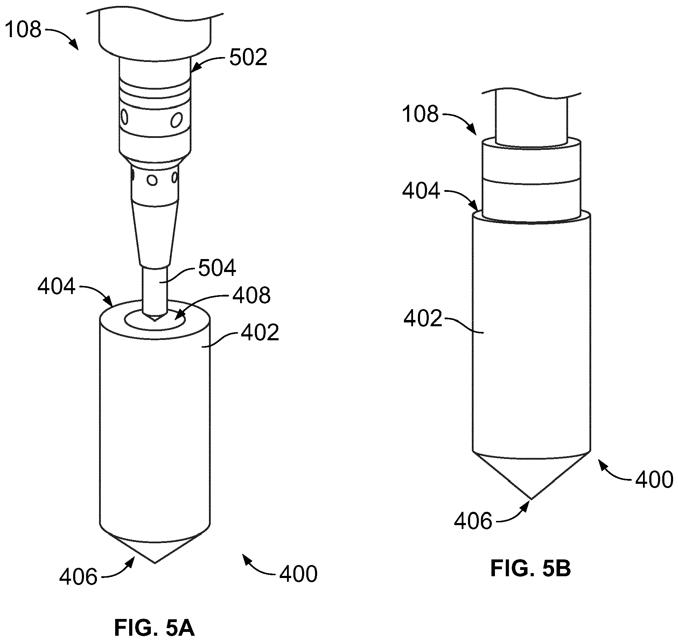

FIGS. 5A and 5B illustrate installation of the example robotic welding tool tip 400 of FIGS. 4A and 4B onto a robotic welding torch (e.g., the torch 108 of FIG. 1). FIG. 5A illustrates the welding torch 108 having a gas diffuser 502 and a contact tip 504, in which a nozzle is removed from the welding torch 108, and with the tool tip 400 prior to installation onto the gas diffuser 502. The tool tip 400 may be installed onto a gas diffuser 502 using a same connection technique as the nozzle, such as via a friction fit (e.g., press fit), a threaded connection, a set screw, and/or any other type of connection. FIG. 5B illustrates the tool tip 400 installed onto the welding torch 108 in place of the nozzle for programming of the robotic welding system 100.

In some other examples, the first end 404 and/or the bore 408 of the tool tip 400 may be configured to be installed onto the gas diffuser in place of the contact tip and the nozzle, installed onto the neck of the welding torch 108 in place of the gas diffuser, or installed in any other configuration onto the welding torch 108.

The example tool tip 400 is installed and secured onto the gas diffuser with sufficient retention force (e.g., friction) that the tool tip 400 remains in place in the event that wire feeding is initiated, such that the force of the wire feed does not push the tool tip 400 off of the gas diffuser and create a potential arc condition.

Returning to FIG. 4A, the second end of the tool tip 400 has an angled surface 410. The angled surface 410 is a conical shape, but may be another shape (e.g., pyramid, wedge, etc.) based on the outer profile of the tool tip 400. The example angled surface 410 includes a first angled portion 412 at a tip of the second end 406, and a second angled portion 414 immediately adjacent the first angled portion 412 toward the first end 404. The first example angled portion 412 has an angle 416 between 20-45 degrees with the longitudinal axis 418 of the tool tip 400 or, in some examples, between 40-45 degrees. An angle 416 of 45 degrees with the longitudinal axis 418 allows the tool tip 400 to contact both surfaces of a 90-degree joint when placed into contact. The longitudinal length of the first angled portion 412 is between 0.2 inches and 0.5 inches.

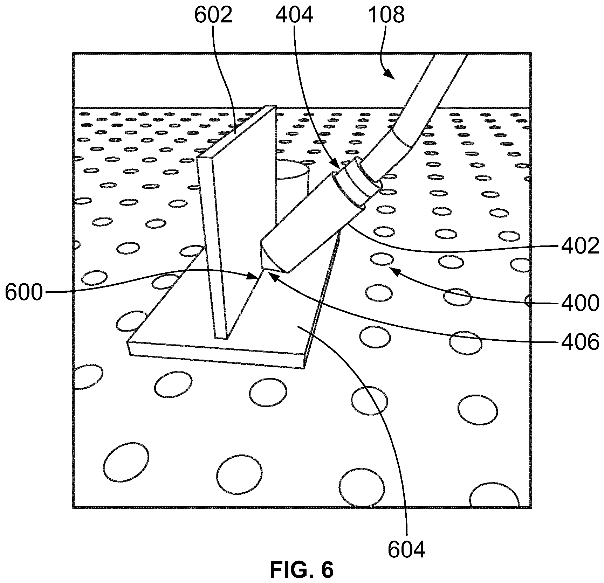

The second angled portion 414 has an angle 420 between 30-40 degrees. The steeper angle in the second angled portion 414 (relative to the first angled portion) provides the operator with more flexibility in teaching positions and/or orientations. FIG. 6 illustrates placement of the example robotic welding tool tip 400 of FIGS. 4A and 4B during lead-through teaching of a robotic welding procedure. As illustrated in FIG. 6, the tool tip 400 may be placed adjacent to a 90-degree joint 602 and directly into contact with both pieces 604, 606 of the j oint 602.

The outer diameter of the example tool tip 400 is 1.25 inches, but may be any desired diameter to accommodate the diameter of the gas diffuser as well as a wall thickness of the tool tip 400. Additionally, the length of the example tool tip 400 is 3.275 inches, but may be any desired length to accommodate the size and/or length of the gas diffuser and/or contact tip, as well as the desired programmed stickout length. For example, the length of the tool tip 400 may be increased for a given gas diffuser and contact tip combination to increase a programmed stickout length, or the length of the tool tip 400 may be decreased to decrease the programmed stickout length. By placing the second end 406 of the tool tip 400 into contact with the joint 602, the operator can more easily maintain a constant stickout length over the length of the weld.

The example tool tip 400 is constructed using a non-conductive material, such as a phenolic material. Phenolic materials provide both temperature insulation and electrical insulation, as well as resistance to breakage in the event of collision between the tool tip 400 and a workpiece and/or other object while being moved by the robotic manipulator 106 (e.g., a collaborative robot that stops motion in response to detecting a threshold force on the robotic arm). However, other materials, such as a hardened plastic that has a sufficiently high melting point to avoid damage from being attached to a hot welding torch, may be used.

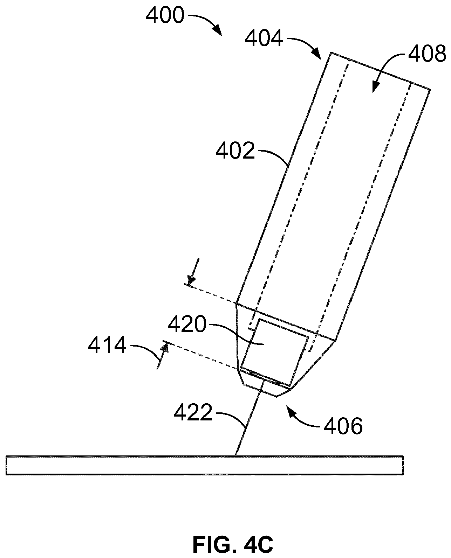

FIG. 4C illustrates another example robotic welding tool tip 420 that may be installed on the robotic welding torch 108 of FIGS. 1-3. The example tool tip 420 is similar to the tool tip 400 of FIGS. 4A and 4B, with the exception that the tip of the second end 406 has an opening through which a laser 422 directs a beam 424 to indicate an aim of the welding torch 108. The example laser 422 may be included within the bore 408 and/or may protrude through the opening in the second end 406 to allow the laser 422 to fit within a tool tip 420 having the same length as the tool tip 400. In some examples, the laser 422 may have a button or other input, which may be actuated by the contact tip to turn on the beam 424 when the tool tip 420 is installed onto the gas diffuser 502.

The second end 406 of the tool tip 400 further includes the angled portion 414, which may have an angle between 30-45 degrees, to allow for positioning the tool tip 420 in contact with the workpiece. The laser 422 may aid the operator in aiming the welding torch during programming without using a wire stickout.

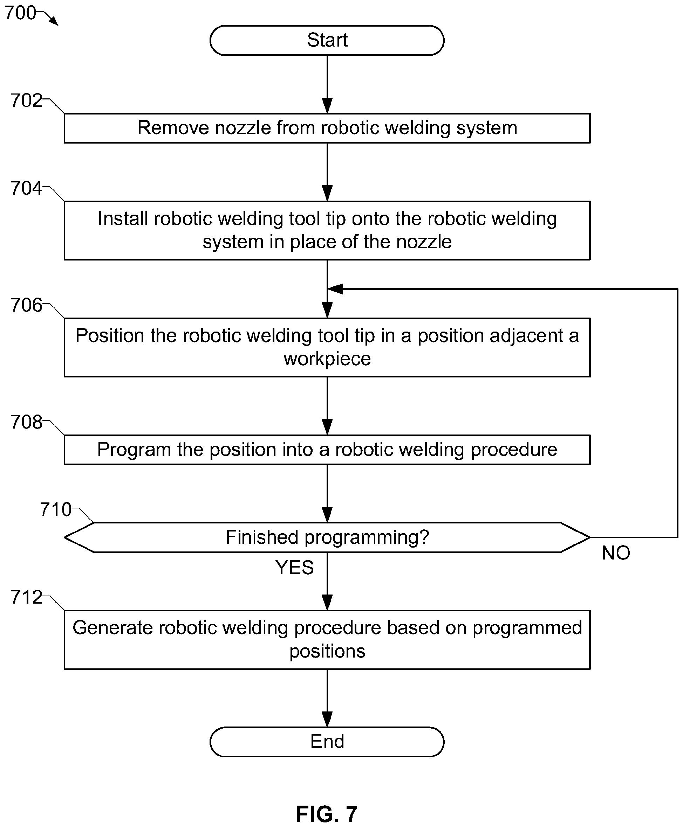

FIG. 7 is a flowchart representative of an example method 700 to program a robotic welding system, such as the robotic welding system 100 of FIG. 1. The example method 700 is described below with reference to the example robotic welding system 100 of FIG. 1 and the robotic welding tool tip 400 of FIGS. 4A-4B. The method 700 begins with the robotic welding system 100 configured for performing a robotic welding procedure (e.g., a nozzle is in place on the welding torch 108).

At block 702, an operator removes the nozzle from the welding torch 108. In examples in which the nozzle is not present (e.g., during assembly or maintenance of the robotic welding system 100), block 702 may be omitted.

At block 704, the operator installs the robotic welding tool tip 400 onto the robotic welding system 100 (e.g., onto the welding torch 108) in place of the nozzle. For example, the operator may push the tool tip 400 over and onto the gas diffuser 502, screw the tool tip 400 onto a threaded connection of the gas diffuser 502, and/or otherwise install the tool tip 400 onto the welding torch 108.

At block 706, the operator positions the tool tip 400 in a position adjacent the workpiece (e.g., the joint 602 of FIG. 6). For example, the operator may position the tool tip 400 at a start point of a weld, an end point of a weld, an intermediate point of a weld, and/or any other desired position. The operator may place the tool tip 400 into contact with the pieces 604, 606 of the joint 602 to assist with setting the desired work angle of the welding torch 108.

At block 708, the operator programs the position into a robotic welding procedure. For example, the operator may use an input button on the welding torch 108 (e.g., a button that programs the current robotic manipulator position into the robotic welding procedure in association with a weld or an air move, etc.), using a pendant interface device to program the current robotic manipulator position, and/or any other interface device to program the position.

At block 710, the operator determines whether programming is finished. If programming is not finished (block 710), the method 700 returns to block 706 to continue repositioning and programming positions into the robotic welding procedure.

When the programming is finished (block 710), at block 712 the robot control system 112 generates the robotic welding procedure based on the programmed positions. The example method 700 may include additional programming and/or editing of the robotic welding procedure prior to and/or after generation of the robotic welding procedure. The generated robotic welding procedure may then be transferred to another robotic welding system for performing welding and/or used by the same robotic welding system 100 used for programming (e.g., after replacing the nozzle onto the welding torch 108). The example method 700 then ends.

As utilized herein the terms "circuits" and "circuitry" refer to physical electronic components (i.e. hardware) and any software and/or firmware (code) that may configure the hardware, be executed by the hardware, and/or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list j oined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power source with a program or other code that, when being loaded and executed, controls the welding power source such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

An example control circuit implementation may be a microcontroller, a field programmable logic circuit and/or any other control or logic circuit capable of executing instructions that executes weld control software. The control circuit could also be implemented in analog circuits and/or a combination of digital and analog circuitry.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

## Claims

1. A robotic welding tool tip for programming, the tool tip comprising a body having a first end configured to be connected to a robotic welding torch in place of a nozzle and a second end having an angled surface.

2. The robotic welding tool tip as defined in claim 1, wherein the first end of the body comprises a bore having an inner diameter configured to be coupled to a gas diffuser of the robotic welding torch.

3. The robotic welding tool tip as defined in claim 2, wherein a diameter and a length of the bore are sized to fit over the gas diffuser.

4. The robotic welding tool tip as defined in claim 1, wherein a length of the body corresponds to a predetermined wire stickout length during operation of the robotic welding torch.

5. The robotic welding tool tip as defined in claim 1, wherein the body comprises an electrically insulating material.

6. The robotic welding tool tip as defined in claim 5, wherein the electrically insulating material comprises a phenolic material.

7. The robotic welding tool tip as defined in claim 1, wherein the angled surface forms an angle between 30-45 degrees with respect to a longitudinal axis of the body.

8. The robotic welding tool tip as defined in claim 1, wherein the angled surface comprises a first portion at a tip of the second end and a second portion immediately adjacent the first portion toward the first end, the first portion forming a first angle with respect to a longitudinal axis of the body and the second portion forming a second angle with respect to the longitudinal axis of the body, the first angle being greater than the second angle.

9. The robotic welding tool tip as defined in claim 8, wherein the first angle is between 40-45 degrees, and the second angle is between 30-40 degrees.

10. The robotic welding tool tip as defined in claim 8, wherein a longitudinal length of the first portion is between 0.2 inches and 0.5 inches.

11. A method to program a robotic welding system, the method comprising:
removing a nozzle from the robotic welding system;
installing a robotic welding tool tip onto the robotic welding system in place of the nozzle;
positioning the robotic welding tool tip in a position adjacent a workpiece to be welded according to a robotic welding procedure; and
programming the position into the robotic welding procedure.

12. The method as defined in claim 11, wherein positioning the robotic welding tool tip comprises placing the robotic welding tool tip into contact with the workpiece.

13. The method as defined in claim 11, wherein installing the robotic welding tool tip comprises attaching the robotic welding tool tip to a gas diffuser of the robotic welding system.

14. The method as defined in claim 11, further comprising selecting the robotic welding tool tip from a plurality of robotic welding tool tips having different lengths, the selecting based on a wire stickout length associated with the robotic welding procedure.

15. The method as defined in claim 11, wherein the positioning the robotic welding tool tip comprises placing the robotic welding tool tip into contact with a fillet joint having two pieces, such that the robotic welding tool tip is in contact with both pieces.
